# EUROPÄISCHE PATENTANMELDUNG

(11) **EP 2 086 094 A2**
(43) Veröffentlichungstag der Anmeldung: **05.08.2009**
(21) Anmeldenummer: 09100078.6
(22) Anmeldetag: 27.01.2009
(51) Int. Cl.: H02K 21/00, H02K 23/00, H02K 29/00

(54) **Permanentmagneterregte elektrische Maschine für ein Hausgerät**

(30) Priorität: 04.02.2008 DE 102008007403
(71) Anmelder: BSH Bosch und Siemens Hausgeräte GmbH, 81739 München (DE)
(72) Erfinder: Laube, Falk, 13158 Berlin (DE); Skrippek, Jörg, 14641 Wustermark OT Priort (DE)

(57) **Zusammenfassung**

Die Erfindung betrifft eine Permanentmagneterregte elektrische Maschine zur Ausrüstung eines Hausgeräts, insbesondere zur Pflege von Wäschestücken, mit einem Stator, welcher eine Statorwicklung zum Erzeugen eines magnetischen Felds aufweist, wobei der Stator eine Zusatzwicklung zum Erzeugen eines magnetischen Felds aufweist.

## Beschreibung

Die vorliegende Erfindung betrifft eine Permanentmagneterregte elektrische Maschine für ein Hausgerät, insbesondere zur Pflege von Wäschestücken, mit einem Stator, welcher eine Statorwicklung zum Erzeugen eines magnetischen Felds aufweist.

Unter dem Begriff Hausgerät wird hier insbesondere eine Waschmaschine, ein Trockner oder ein Waschtrockner verstanden. Unter den Begriff fallen aber auch andere Hausgeräte.

Vorliegend richtet sich das Interesse auf eine bürstenlose Gleichstrommaschine, bei welcher es sich aufgrund einer Drehstromansteuerung auf einer Ebene der Motorklemmen um eine permanentmagneterregte Synchronmaschine handelt, welche allerdings mittels einer Umrichterelektronik mit Gleichspannung gespeist werden kann. Bei konventionellen Hausgeräten zur Pflege von Wäschestücken zeichnen sich die Waschvorgänge dadurch aus, dass ein sehr großer Drehzahlbereich von dem Motor abgedeckt werden muss. Üblicherweise sind bei Hausgeräten mit Riemengetriebe im Waschbetrieb relativ hohe Drehmomente bei verhältnismäßig kleinen Drehzahlen von in der Regel wenigen 100 U/min gefordert. Hingegen werden in einem Schleuderbetrieb Motordrehzahlen von weit über 10.000 U/min erreicht. Der bei hohen Drehzahlen üblicherweise zur Anwendung kommende Feldschwächbetrieb, bei welchem oberhalb einer Eckdrehzahl des Motors durch Phasenschwenkung eines Ankerstroms gegenüber einer Feldwelle ein Betrieb mit näherungsweise konstanter Leistung erreicht werden kann, ist insbesondere bei permanenterregten Synchronmaschinen bzw. bürstenlosen Gleichstrommaschinen nicht möglich. Eine optimale Anpassung des Umrichters an beide Betriebspunkte, also Waschen und Schleudern, ist aufgrund des großen Verhältnisses von Waschdrehzahl zu der Schleuderdrehzahl stark kompromissbehaftet. Die Realisierung beider Betriebspunkte erfordert somit hohe Motorströme, was im Hinblick auf die Kühlung des Umrichters und die Leistungsaufnahme des Motors besonders ineffizient ist.

Die Aufgabe der vorliegenden Erfindung besteht darin, eine permanentmagneterregte elektrische Maschine zu schaffen, bei welcher mit geringem Aufwand Maßnahmen getroffen sind, die bei einem energieeffizienten Betreiben der Maschine ein Abdecken eines großen Drehzahlbereichs gewährleisten.

Diese Aufgabe wird erfindungsgemäß durch eine permanentmagneterregte elektrische Maschine mit den Merkmalen gemäß unabhängigem Patentanspruch gelöst. Vorteilhafte Ausgestaltungen der Erfindung sind in den Unteransprüchen angegeben.

Eine erfindungsgemäße permanentmagneterregte elektrische Maschine für ein Hausgerät, insbesondere zur Pflege von Wäschestücken, umfasst einen Stator, welcher eine Statorwicklung zum Erzeugen eines magnetischen Felds aufweist. Ein Grundgedanke der Erfindung besteht darin, dass der Stator eine Zusatzwicklung zum Erzeugen eines magnetischen Felds aufweist.

Ein wesentlicher Gedanke der Erfindung besteht mit anderen Worten darin, mittels einer an dem Stator angeordneten Zusatzwicklung weit auseinander liegende Drehzahlen zu erreichen. In vorteilhafter Weise wird durch die erfindungsgemäße elektrische Maschine erreicht, dass unter Verwendung der Zusatzwicklung eine optimale Anpassung eines Umrichters an unterschiedliche Drehzahlen ermöglicht wird. Hierdurch kann die Strombelastung des Umrichters reduziert und somit eine kostenreduzierte sowie bauteilreduzierte elektrische Maschine geschaffen werden. Insbesondere sind die Statorwicklung und die Zusatzwicklung derart ausgebildet, dass für einen Waschbetrieb des Hausgeräts, bei welchem bei einem hohen Drehmoment eine relativ kleine Drehzahl erreicht werden muss, eine größere Windungszahl als für einen Schleuderbetrieb, bei welchem bei einem kleineren Drehmoment eine höhere Drehzahl erreicht werden muss, wirksam ist. Insbesondere kann vorgesehen sein, dass eine Wicklungsumschaltung nicht bei einer fest vordefinierten Drehzahl, sondern in Abhängigkeit einer Leistungsreserve der Maschine bzw. einer Stellgrößenreserve vorgenommen wird. Darüber hinaus wird durch die Zusatzwicklung im Hinblick auf ein energieeffizientes Betreiben des Hausgeräts erreicht, dass ein Umrichter kleinerer Leistungsklassen aufgrund kleinerer Maximalströme verwendet werden kann. Überdies kann hierdurch eine Reduzierung der Umrichterverluste sowie eine Steigerung des Systemwirkungsgrades erreicht werden.

Bevorzugt weist die Maschine einen Rotor auf, welcher relativ zu dem Stator rotatorisch bewegbar gelagert ist, wobei die Maschine als Innenläufer ausgebildet ist. Insbesondere im Hinblick auf das Erreichen von höheren Drehzahlen zeigt sich die Ausführung der Maschine als Innenläufer besonders vorteilhaft.

In einer Ausführungsform weisen die Statorwicklung und die Zusatzwicklung jeweils drei Spulenstränge auf, welche zum Betrieb mit Drehstrom ausgebildet sind. Insbesondere ist bei der Maschine ein Umrichter vorgesehen, mittels welchem der Drehstrom aufgrund einer Gleichspannung bzw. einer gleichgerichteten Wechselspannung von Seiten eines Versorgungsnetzes erzeugbar ist.

Gemäß einer Ausführungsform kann vorgesehen sein, dass die Statorwicklung und die Zusatzwicklung an dem Stator parallel zueinander gewickelt sind. So sind die Statorwicklung und die Zusatzwicklung insbesondere als eine ineinander geführte Doppelwicklung an dem Stator gewickelt. Vorzugsweise können die Statorwicklung und die Zusatzwicklung an dem Stator durch gleichzeitiges Wickeln in einem Arbeitsschritt eingebracht werden. Hierdurch wird im Hinblick auf die Fertigung ein technisch wenig aufwändiges Wickeln der beiden Wicklungen erreicht.

Vorzugsweise ist eine Schalteinheit vorgesehen, welche zum elektrischen Parallelschalten oder zum elektrischen Seriellschalten der Statorwicklung und der Zusatzwicklung ausgebildet ist. Insbesondere ist ein separates Relais vorgesehen, mittels welchem eine Wicklungsumschaltung zwischen einer elektrischen Reihenschaltung der parallel zueinander gewickelten Statorwicklung und der Zusatzwicklung sowie einer elektrischen Parallelschaltung der beiden Wicklungen erfolgt. Sind die beiden an dem Stator angeordneten Wicklungen elektrisch parallel geschaltet, so kann insbesondere eine hohe Drehzahl erreicht werden, wohingegen bei einer elektrischen Reihenschaltung der beiden Wicklungen eine niedrigere Drehzahl erreicht wird. Vorzugsweise erfolgt das Parallelschalten oder das Seriellschalten mittels der Schalteinheit in Abhängigkeit einer Betriebsbedingung des Hausgeräts. Unter der Betriebsbedingung wird dabei insbesondere ein Übergang von einem Waschbetrieb in einen Schleuderbetrieb des Hausgeräts verstanden.

In einer alternativen Ausführungsform sind die Statorwicklung und die Zusatzwicklung an dem Stator getrennt voneinander gewickelt. Insbesondere sind die beiden Wicklungen bei dieser Ausführungsform separat und beabstandet voneinander am Stator als eigene Einheiten angeordnet. Vorzugsweise ist eine Schalteinheit vorgesehen, welche zum Bestromen von lediglich der Statorwicklung oder der Zusatzwicklung oder zum seriellen Bestromen der Statorwicklung und der Zusatzwicklung ausgebildet ist. Durch die Anordnung der beiden Wicklungen getrennt voneinander wird erreicht, dass lediglich eine der beiden Wicklungen mittels der Schalteinheit oder gleichzeitig beide Wicklungen in Reihe bestromt werden können. Insbesondere können die Statorwicklung und die Zusatzwicklung unterschiedliche Windungszahlen aufweisen, so dass eine dreistufige Regelung der Drehzahl gewährleistet werden kann. Insbesondere sind für einen Waschbetrieb beide Wicklungen elektrisch in Reihe geschaltet, wodurch eine niedrigere Drehzahl bei einer kleinen Stromaufnahme erreicht wird. Bei einem Übergang in einen Schleuderbetrieb wird insbesondere eine der beiden Wicklungen, die Zusatzwicklung oder die Statorwicklung, abgeschaltet, wodurch eine höhere Drehzahl erreicht werden kann. Das Bestromen erfolgt somit vorzugsweise in Abhängigkeit einer Betriebsbedingung des Hausgeräts.

Vorzugsweise ist der Maschine ein Spannungswandler, insbesondere ein Umrichter, zugeordnet, welcher mit der Schalteinheit gekoppelt ist. Insbesondere ist der Spannungswandler dazu ausgebildet, eine Gleichspannung bzw. eine gleichgerichtete Wechselspannung eines Versorgungsnetzes in einen Drehstrom zu wandeln, mit welcher die Maschine versorgbar ist. Es kann vorgesehen sein, dass der Spannungswandler eine Brückenschaltung mit Transistoren, beispielsweise Feldeffekttransistoren (MOSFET), aufweist.

In einer alternativen Ausführungsform kann die Schalteinheit in den Spannungswandler integriert sein bzw. der Spannungswandler kann die Funktion der Schalteinheit haben.

Bevorzugt weist der Stator eine Gruppe von Zähnen auf, welche von einer Drehachse radial beabstandet angeordnet sind, wobei die Statorwicklung und die Zusatzwicklung als Zahnwicklungen ausgebildet sind.

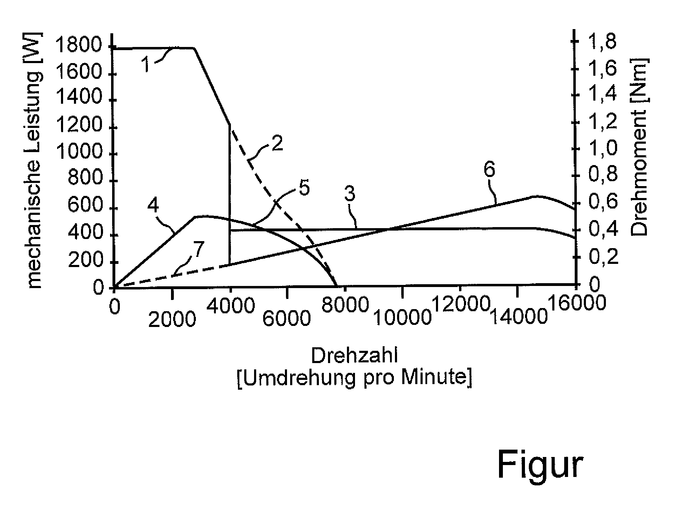

Weitere Vorteile, Merkmale und Einzelheiten der Erfindung ergeben sich aus der nachfolgenden Beschreibung eines bevorzugten Ausführungsbeispiels sowie anhand der Zeichnung.

Die einzige Figur zeigt Verläufe einer mechanischen Leistung sowie eines Drehmoments einer permanentmagneterregten elektrischen Maschine mit und ohne Wicklungsumschaltung.

Im vorliegenden Beispiel umfasst ein Hausgerät zur Pflege von Wäschestücken, vorliegend eine Waschmaschine, eine permanentmagneterregte elektrische Maschine, welche zum Antreiben einer im Hausgerät angeordneten Trommel ausgebildet ist. Die permanentmagneterregte elektrische Maschine weist dabei einen Stator auf, welcher eine Statorwicklung zum Erzeugen eines magnetischen Felds, insbesondere eines Drehfelds, aufweist. Vorliegend umfasst die permanentmagneterregte elektrische Maschine erfindungsgemäß eine Zusatzwicklung, welche an dem Stator angeordnet ist.

Im Beispiel weist das Hausgerät darüber hinaus eine Steuereinheit, beispielsweise einen Mikroprozessor, auf, welche dazu ausgebildet ist, entweder beide, die Statorwicklung und die Zusatzwicklung, oder lediglich eine der Wicklungen zu bestromen. Vorliegend wird angenommen, dass die Zusatzwicklung und die Statorwicklung schaltungstechnisch in Reihe miteinander geschaltet werden können.

Die Figur gibt einen Verlauf einer mechanischen Leistung sowie einen Verlauf eines Drehmoments der Maschine in Abhängigkeit einer Drehzahl wieder. Dabei wird angenommen, dass beim Einschalten der Maschine beide Wicklungen bestromt werden. Überdies wird vorliegend eine Wicklungsumschaltung bei einer Drehzahl von beispielsweise 4.000 U/min vorgenommen. Eine Teilkurve 1 stellt dabei das Drehmoment der Maschine in einem Drehzahlbereich von 0 bis 4.000 U/min dar. Eine gestrichelt dargestellte Teilkurve 2 stellt einen Verlauf des Drehmoments der Maschine ab der Drehzahl von 4.000 U/min dar, wobei angenommen wird, dass keine Wicklungsumschaltung durchgeführt wird (Stand der Technik). Eine weitere Teilkurve 3 stellt dabei einen Verlauf des Drehmoments der Maschine ab der Drehzahl 4.000 U/min dar, wobei nun eine Wicklungsumschaltung bei Erreichen der Drehzahl 4.000 U/min vorgenommen wird.

Die Figur zeigt überdies eine Teilkurve 4, welche einen Verlauf einer mechanischen Leistung in einem Drehzahlbereich von 0 bis 4.000 U/min darstellt. Darüber hinaus stellt eine weitere Teilkurve 5 einen Verlauf der mechanischen Leistung ab der Drehzahl von 4.000 U/min dar, wobei angenommen wird, dass keine Wicklungsumschaltung durchgeführt wird. Außerdem ist in der Figur eine weitere Teilkurve 6 dargestellt, welche einen Verlauf der mechanischen Leistung der Maschine ab der Drehzahl 4.000 U/min darstellt, wobei eine Wicklungsumschaltung bei Erreichen einer Drehzahl von 4.000 U/min vorgenommen wird. Schließlich stellt eine gestrichelte Teilkurve 7 einen Verlauf der mechanischen Leistung in dem Drehzahlbereich von 0 bis 4.000 U/min dar, wobei die Wicklungsumschaltung bereits bei stehender Trommel vorgenommen wird.

Unter der Wicklungsumschaltung wird dabei eine Umschaltung zwischen einem Bestromen von der Reihenschaltung der Statorwicklung und der Zusatzwicklung und einem Bestromen lediglich einer der beiden Wicklungen verstanden, wobei in dem Drehzahlbereich von 0 bis 4.000 U/min beide Wicklungen in Reihe bestromt werden und ab der Drehzahl von 4.000 U/min lediglich eine der Wicklungen bestromt wird. Wie in der Figur eingezeichnet ist, ist das Drehmoment in einer Anlaufphase der Maschine, also in einem so genannten Eckdrehzahlbereich, relativ hoch und beträgt etwa 1.800 Nm. In diesem Eckdrehzahlbereich steigt die mechanische Leistung von 0 bis etwa 520 Watt, was an dem Verlauf der Teilkurve 4 zu sehen ist. Betrachtet man die Verläufe des Drehmoments und der mechanischen Leistung ohne die Wicklungsumschaltung, so kann anhand der Teilkurven 2, 5 erkannt werden, dass lediglich eine Drehzahl von ungefähr 7.500 U/min erreicht werden kann. Hingegen zeigt sich die intelligente Wicklungsumschaltung, beispielsweise bei einer Drehzahl von 4.000 U/min, besonders vorteilhaft. Wie in der Figur eingezeichnet ist, wird durch die geschickte Wicklungsumschaltung erreicht, dass ein konstantes Drehmoment von etwa 400 Nm in einem Drehzahlbereich bis über 16.000 U/min gewährleistet wird. Dies kann anhand der Teilkurve 3 erkannt werden. Entsprechend wird durch die Wicklungsumschaltung bei Erreichen der Drehzahl von 4.000 U/min erzielt, dass die mechanische Leistung in dem Drehzahlbereich von 4.000 bis etwa 15.000 U/min ansteigt, was in der Figur mit der Teilkurve 6 eingezeichnet ist.

Durch die Auslegung dieser permanentmagneterregten elektrischen Maschine und insbesondere durch die Wicklungsumschaltung wird erreicht, dass ein größerer Bereich der Drehzahl abgedeckt werden kann.

Es kann vorgesehen sein, dass die Wicklungsumschaltung nicht wie im vorliegenden Beispiel bei Erreichen einer Drehzahl von 4.000 U/min, sondern beispielsweise bei Erreichen einer Drehzahl von 5.000 U/min erfolgen kann. Wie in der Figur dargestellt ist, könnte somit erreicht werden, dass die mechanische Leistung den Wert von 200 Watt nicht unterschreitet.

## Patentansprüche

1. Permanentmagneterregte elektrische Maschine für ein Hausgerät, insbesondere zur Pflege von Wäschestücken, mit einem Stator, welcher eine Statorwicklung zum Erzeugen eines magnetischen Felds aufweist, **dadurch gekennzeichnet, dass** der Stator eine Zusatzwicklung zum Erzeugen eines magnetischen Felds aufweist.

2. Elektrische Maschine nach Anspruch 1, **dadurch gekennzeichnet, dass** die Maschine einen Rotor aufweist, welcher relativ zu dem Stator rotatorisch bewegbar gelagert ist, wobei die Maschine als Innenläufer ausgebildet ist.

3. Elektrische Maschine nach Anspruch 1 oder 2, **dadurch gekennzeichnet, dass** die Statorwicklung und die Zusatzwicklung jeweils drei Spulenstränge aufweisen, welche zum Betrieb mit Drehstrom ausgebildet sind.

4. Elektrische Maschine nach einem der vorhergehenden Ansprüche, **dadurch gekennzeichnet, dass** die Statorwicklung und die Zusatzwicklung an dem Stator parallel zueinander gewickelt sind.

5. Elektrische Maschine nach Anspruch 4, **dadurch gekennzeichnet, dass** eine Schalteinheit vorgesehen ist, welche zum elektrischen Parallelschalten oder zum elektrischen Seriellschalten der Statorwicklung und der Zusatzwicklung ausgebildet ist.

6. Elektrische Maschine nach Anspruch 5, **dadurch gekennzeichnet, dass** das Parallelschalten oder das Seriellschalten mittels der Schalteinheit in Abhängigkeit einer Betriebsbedingung des Hausgeräts erfolgt.

7. Elektrische Maschine nach einem der Ansprüche 1 bis 3, **dadurch gekennzeichnet, dass** die Statorwicklung und die Zusatzwicklung am Stator getrennt voneinander gewickelt sind.

8. Elektrische Maschine nach Anspruch 7, **dadurch gekennzeichnet, dass** eine Schalteinheit vorgesehen ist, welche zum Bestromen von lediglich der Statorwicklung oder der Zusatzwicklung oder zum seriellen Bestromen der Statorwicklung und der Zusatzwicklung ausgebildet ist.

9. Elektrische Maschine nach Anspruch 8, **dadurch gekennzeichnet, dass** das Bestromen in Abhängigkeit einer Betriebsbedingung des Hausgeräts erfolgt.

10. Elektrische Maschine nach Anspruch 5 oder 8, **dadurch gekennzeichnet, dass** der Maschine ein Spannungswandler, insbesondere ein Umrichter, zugeordnet ist, welcher mit der Schalteinheit gekoppelt ist.

11. Elektrische Maschine nach einem der vorhergehenden Ansprüche, **dadurch gekennzeichnet, dass** der Stator eine Gruppe von Zähnen aufweist, welche von einer Drehachse radial beabstandet angeordnet sind, wobei die Statorwicklung und die Zusatzwicklung als Zahnwicklungen ausgebildet sind.
